# EUROPEAN PATENT APPLICATION

(11) **EP 2 835 559 A1**
(43) Date of publication of application: **11.02.2015**
(21) Application number: 13179385.3
(22) Date of filing: 06.08.2013
(51) Int. Cl.: F16F 15/08, H02K 5/24

(54) **Mounting structure for an electric motor**

(71) Applicant: Siemens Aktiengesellschaft, 80333 München (DE)
(72) Inventor: Vavra, Libor, 74401 Frenstát p.R. (CZ); Bayer, Vladimir, 74401 Frenstát p.R. (CZ); Raska, Radomir, 74401 Frenstát p.R. (CZ); Velicka, Alexandr, 74221 Kopøivnice (CZ)

(57) **Abstract**

A mounting structure (1) for an electric motor, wherein a frame (2) of the motor is mounted to a foot (4) by means of a screw (6), wherein the screw (6) extends through a hole (14) in a spacer plate (12) situated between the frame (2) and the foot (4), shall allow the mounting of an electric motor with low manufacturing efforts, while at the same time allowing for vibrations to stay within allowable limits. To this end, the spacer plate (12) comprises an elastic material.

## Description

The invention is related to a mounting structure for an electric motor, wherein a frame of the motor is mounted to a foot by means of a screw, wherein the screw extends through a hole in a spacer plate situated between the frame and the foot.

An electric motor is an electric machine that converts electrical energy into mechanical energy. In normal motoring mode, most electric motors operate through the interaction between an electric motor's magnetic field and winding currents to generate force within the motor. In certain applications, such as in the transportation industry with traction motors, electric motors can operate in both motoring and generating or braking modes to also produce electrical energy from mechanical energy.

Commonly used today are induction or asynchronous motors. These are alternating current (AC) motors in which all electromagnetic energy is transferred by inductive coupling from a primary winding to a secondary winding, the two windings being situated on the stator and rotor, respectively, and separated by an air gap.

In common applications, the stator and rotor of an electrical motor are assembled inside a frame that is mounted to a foot forming a motor assembly. The foot is used to fix the motor at its installation point. Usually, the frame is mounted to the feet by means of screws. Often, a steel spacer plate is situated between the frame and the foot in order to evenly distribute pressure.

Due to the alternating electromagnetic forces in the electric motor, vibration occurs that is transferred to the foot and mounting of the motor. As the vibrations may limit the lifetime of the assembly and its operational safety, international standards such as IEC 60034-14 and ISO 10816 set an allowable limit on the magnitude of the vibrations.

Especially for larger electric motors, the magnitude of the vibrations caused at the frame exceeds the allowable limit. Therefore, mounted feet are usually replaced by casted feet if frame and feet stiffness cannot be increased otherwise. However, this increases manufacturing efforts and complicates replacement of the motor.

From US 2005/179180 A1, a mounting structure for a smaller electric motor is known that comprises cylindrical rubber bushes that are inserted into a through-hole of a bracket in order to attach the motor to the frame. However, a such mounting structure causes increased manufacturing efforts due to the multitude of additional parts required, including rubber bushes and retainer bushes, and may not be suitable for larger motors because it allows movement of the motor in all spatial directions.

It is therefore the object of the invention to provide a mounting structure for an electric motor that allows the mounting of an electric motor with low manufacturing efforts, while at the same time allowing for vibrations to stay within allowable limits.

This object is inventively solved by the spacer plate comprising an elastic material.

The invention is based on the consideration that vibrations do not occur at free suspension of the motor due to cancellation of low natural frequencies. A cancellation of these frequencies is also possible by using elastic elements made of e.g. rubber in a mounting structure for the electric motor. To ensure low manufacturing efforts, the elastic elements should be used in conjunction with a conventional screwthread connection. This is achieved by using an elastic spacer plate that is situated between frame of the motor and foot, surrounds the screw connecting frame and foot and thus serves as a damping element.

Advantageously, a distance tube encloses the screw, limiting the engagement depth of the screw. The distance tube ensures a minimum distance between the screw head and the surroundings of the thread. By choosing a distance tube of a given length, the flexibility of the damping element can be adjusted so that vibrations are damped on the largest possible scale with respect to size design and conditions of the electric motor. The distance tube also ensures stable positioning of the mounted feet and stability of the axial height.

Furthermore, the hole in the spacer plate is advantageously shaped to the outer form of the distance tube. This ensures a secure and firm connection of spacer plate and distance tube and thus improves stability of the mounting structure.

Advantageously, the distance tube has a cylindrical shape. This facilitates assembly of the mounting structure and allows the use of standard parts, reducing production cost.

In an advantageous embodiment, the screw extends through a hole in the foot and is screwed into a thread of the frame. This also facilitates assembly of the mounting structure because the screw can be fastened and loosened from outside the mounting assembly.

In a further advantageous embodiment, the foot and/or the frame comprise a deepening surrounding the screw, and wherein the respective deepening is shaped to the outer form of the spacer plate. This ensures a proper fixation of the spacer plate in a direction perpendicular to the axis of the screw, especially during assembly.

An electric motor assembly advantageously comprises a mounting structure as described.

The electric motor assembly advantageously comprises a squirrel-cage rotor. A squirrel-cage rotor essentially is a cylinder mounted on a shaft. Internally it contains longitudinal conductive bars (usually made of aluminium or copper) set into grooves and connected at both ends by shorting rings forming a cage-like shape. The solid core of the squirrel cage rotor is built with stacks of electrical steel laminations.

Furthermore, the stator of the motor advantageously comprises a single pair of poles. Particularly squirrel-cage rotors with a single pole pair suffer from vibrations, because the force between stator and rotor produced by the power supply has two peaks during each cycle. This results in a vibration mode equal to two times the frequency of the power source. This particular vibration is very sensitive to the motor's frame and feet stiffness, so the described mounting structure is particularly advantageous in such a motor.

The advantages achieved by the invention particularly comprise the fact that placing an elastic spacer between feet and frame of an electric motor, in particular a squirrel cage motor, results in a reduction of vibrations and thus increases operational safety and lifespan. Due to the damping effect of the elastic spacer, feet mounted with screws can be used where otherwise casted feet would be necessary. The elastic spacer will reduce all kinds of vibration coming from different sources such as mechanical unbalances, mechanical or electromagnetic asymmetry etc. and generally improves the vibration behaviour.

An embodiment of the invention is described in detail by means of a drawing.
- FIG 1: shows a cross-sectional view of a mounting structure for an electric motor along the axis of a screw,
- FIG 2: shows an exploded view of the mounting structure,
- FIG 3: shows an exterior view of the electric motor, and
- FIG 4: shows an cross-sectional schematic view of the electric motor.

Like reference numerals refer to corresponding parts throughout the figures.

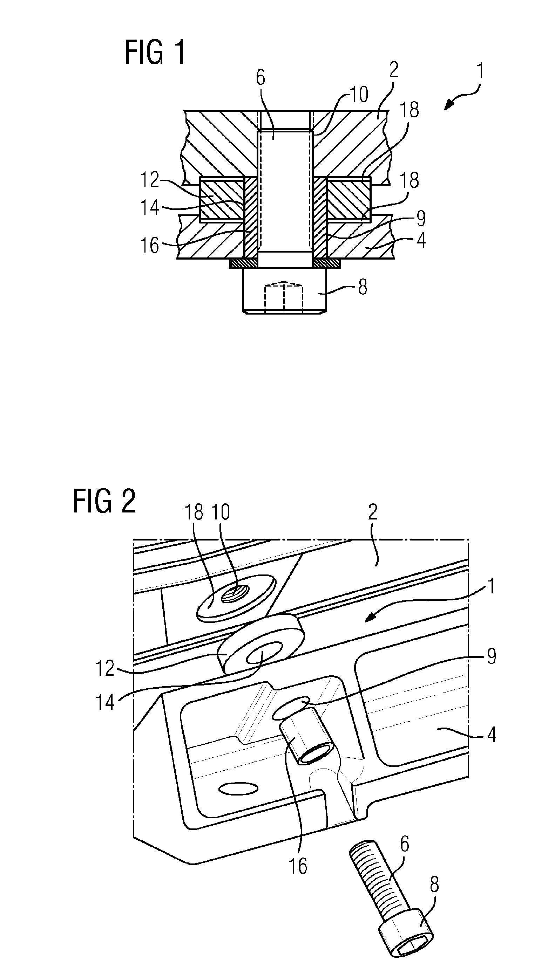

FIG 1 shows a cross-sectional view of a mounting structure 1 for an electric motor, in particular a squirrel cage motor. The mounting structure 1 connects the static frame 2 to a foot 4 by means of a screw 6. The screw 6 has a cylindrical shape and a head 8 with a larger diameter than the body of the screw 6. The body of the screw 6 has an external thread (not shown). The screw 6 penetrates a hole 9 in the foot 4 having a smaller diameter than the head 8 of the screw 6 and is screwed into a threaded hole 10 in the frame 2.

The general structure of the squirrel cage motor has been already described. Due to the electromagnetic alternating forces, vibrations will occur, in particular in squirrel cage motors with two poles. To dampen these vibrations, a spacer plate 12 made of an elastic material is placed between frame 2 and foot 4. The elastic material may e.g. consist of rubber.

The spacer plate 12 has a circular shape with a central hole 14. The screw 6 penetrates the hole 14 in the spacer plate 12. In addition, a distance tube 16 of cylindrical shape encloses the screw 6. Its outer diameter is smaller than that of the head 8 of the screw 6 so the distance tube 16 limits the penetration depth of the screw 6 into the threaded hole 10.

The outer diameter of the distance tube 16 corresponds to the diameter of the hole 14 of the spacer plate 12 and to the diameter of the hole 9 in the foot 4. Both foot 4 and frame 2 have a circular deepening 18 having the same diameter as the spacer plate 12. The spacer plate 12 is therefore partly immersed into the surfaces of the foot 4 and the frame 2.

FIG 2 shows an exploded view of the mounting structure 1 already shown in FIG 1. FIG 2 shows the different parts of the mounting structure 1 separately, i.e. before assembly.

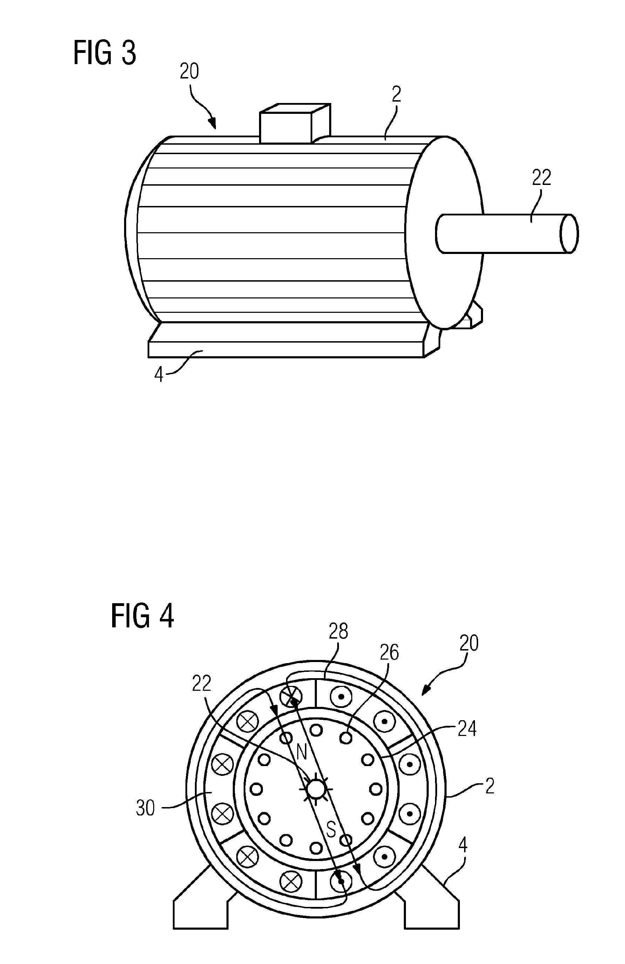

FIG 3 shows an exterior view of the electric motor 20. FIG 3 shows the cylindrical frame 2 and two feet 4 that are connected to the frame 2 by means of the mounting structure 1 (not shown in FIG 3). The feet 4 have a linear shape and extend parallel to the axis of the motor. The shaft 22 of the motor extends outside the frame 2.

FIG 4 shows a cross-sectional schematic view of the motor 20. In the center of the motor 20, the rotor 24 is located. The rotor 24 is a squirrel-cage rotor 24 and consists of a solid cylinder built with stacks of electrical steel laminations mounted on the shaft 22. Internally it contains longitudinal conductive bars 26 made of aluminium or copper. The bars 25 are set into grooves and connected at both ends by shorting rings forming a cage-like shape.

The stator 28 of the motor 20 is surrounded by the frame 2. The field windings in the stator 28 form three inductor 30 that are arranged in the stator 28, each inductor 30 being rotated by 120 degrees to the others. Three-phase electric power flows through the field windings of the inductors 30, setting up a rotating magnetic field with a single pole pair (marked with N for north and S for south) through the rotor 24. The relative motion between this field and the rotation of the rotor 24 induces electric current in the conductive bars 26. In turn these currents lengthwise in the conductors react with the magnetic field of the motor 22 to produce force acting at a tangent orthogonal to the rotor 24, resulting in torque to turn the shaft 22. In effect the rotor 24 is carried around with the magnetic field but at a slightly slower rate of rotation.

The mounting structure 1 effectively reduces vibrations occurring in the motor 20 and thus increases its lifespan.

## Claims

1. A mounting structure (1) for an electric motor (20), wherein a frame (2) of the motor (20) is mounted to a foot (4) by means of a screw (6), wherein the screw (6) extends through a hole (14) in a spacer plate (12) situated between the frame (2) and the foot (4), and wherein the spacer plate (12) comprises an elastic material.

2. The mounting structure (1) of claim 1, wherein a distance tube (16) encloses the screw (6), limiting the engagement depth of the screw (6).

3. The mounting structure (1) of claim 2, wherein the hole (14) in the spacer plate (12) is shaped to the outer form of the distance tube (16).

4. The mounting structure (1) of claim 3, wherein the distance tube (16) has a cylindrical shape.

5. The mounting structure (1) of any of the preceding claims, wherein the screw (6) extends through a hole (9) in the foot (4) and is screwed into a thread of the frame (2).

6. The mounting structure (1) of any of the preceding claims, wherein the foot (4) and/or the frame (2) comprise a deepening (18) surrounding the screw (6), and wherein the respective deepening (18) is shaped to the outer form of the spacer plate (12).

7. An electric motor (20) assembly comprising the mounting structure (1) of any of the preceding claims.

8. The electric motor (20) assembly of claim 7 comprising a squirrel-cage rotor (24).

9. The electric motor (20) assembly of claim 7 or 8, wherein the stator (28) of the motor (20) comprises a single pair of poles.
